# EUROPEAN PATENT APPLICATION

(11) **EP 2 608 025 A1**
(43) Date of publication of application: **26.06.2013**
(21) Application number: 12192237.1
(22) Date of filing: 12.11.2012
(51) Int. Cl.: G06F 9/44, G05B 19/042, G05B 19/05, G06T 11/40

(54) **Method and apparatus for computer aided design of human-machine interface animated graphical elements**

(30) Priority: 11.11.2011 US 201161558682 P; 07.11.2012 US 201213671276
(71) Applicant: Rockwell Automation Technologies, Inc., Mayfield Heights, OH 44124 (US)
(72) Inventor: Daily, Gordon, Solon, OH 44139 (US); Thomas, David E., Germantown, WI 53022 (US); Kowal, Steven John, Milwaukee, WI 53207 (US); Krueger, Kevin, Milwaukee, WI 53202 (US); Smith, Kevin C., Franklin, WI 53132 (US); Reichard, Douglas J., Fairview, OH 44126 (US); Delisle, Matthew S., Glendale, WI 53209 (US); Balistrieri, Joseph, Grafton, WI 53024 (US); Bumgardner, Matthew, Mayfield Heights, OH 44124 (US); Ridenour, David, Mayfield Heights, OH 44124 (US)
(74) Representative: Grünecker, Kinkeldey, Stockmair & Schwanhäusser

(57) **Abstract**

One or more non-transitory computer-readable media having stored thereon program instructions to facilitate the computer aided design of human machine interface animated graphical elements is provided. The program instructions, when executed by a computing system, direct the computing system to at least display a graphical element having dimensions associated with a characteristic of an industrial element within an industrial automation environment. The program instructions further direct the computing system to at least identify a change in the characteristic of the industrial element, and to modify a dimension of the graphical element to visually represent the change in the characteristic of the industrial element.

## Description

### RELATED APPLICATIONS

This application hereby claims the benefit of and priority to U.S. Provisional Patent Application Number 61/558,682, titled "METHOD AND APPARATUS FOR COMPUTER AIDED DESIGN OF HUMAN-MACHINE INTERFACE ANIMATED GRAPHICAL ELEMENTS", filed on November 11, 2011 and which is hereby incorporated by reference in its entirety.

### TECHNICAL BACKGROUND

In many industrial environments the quantity and complexity of equipment used requires automation in order to make productive use of the equipment. Automation is enhanced by simplified interfaces between the users of the equipment and the equipment itself. Often this function is provided through the use of a human machine interface, which can be a simple computer including a touch screen or other input device to allow the user to control the equipment.

It is often desirable to make the human machine interface flexible to allow its use on a variety of equipment in a variety of configurations. This requires that the human machine interface be readily configurable. Often equipment is represented on the human machine interface by a plurality of graphical elements. Some of these graphic elements are static and unchanging, while others are dynamic and react to changes within the machinery which are displayed to the user on the human machine interface.

Customizing these graphic elements into displays for every foreseeable piece of equipment is impossible, so it is necessary to make the design of human machine interface screens as easy as possible. Often, this involves the creation of huge libraries of graphical elements to represent machine displays and controls. Obviously the creation of these libraries is a huge effort, and streamlining the creation of human machine interface animated graphical elements is very valuable.

### OVERVIEW

In an embodiment, one or more non-transitory computer-readable media having stored thereon program instructions to facilitate the computer aided design of human machine interface animated graphical elements is provided. The program instructions, when executed by a computing system, direct the computing system to at least display a graphical element having dimensions associated with a characteristic of an industrial element within an industrial automation environment. The program instructions further direct the computing system to at least identify a change in the characteristic of the industrial element, and to modify a dimension of the graphical element to visually represent the change in the characteristic of the industrial element.

In another embodiment, a method for the computer aided design of human machine interface animated graphical elements is provided. The method includes displaying a graphical element having dimensions associated with a characteristic of an industrial element within an industrial automation environment. The method also includes identifying a change in the characteristic of the industrial element, and modifying a dimension of the graphical element to visually represent the change in the characteristic of the industrial element.

In a further embodiment, a computer aided design system for the computer aided design of human machine interface animated graphical elements is provided. The computer aided design system includes a communication interface configured to receive characteristics of an industrial element within an industrial automation environment, and a processor coupled to the communication interface. The processor is configured to initiate a display of a graphical element having dimensions associated with a characteristic of the industrial element, and to identify a change in the characteristic of the industrial element. The processor is also configured to modify a dimension of the graphical element to visually represent the change in the characteristic of the industrial element, and to initiate a display of the modified graphical element.

This overview is provided to introduce a selection of concepts in a simplified form that are further described below in the Technical Disclosure. It should be understood that this Overview is not intended to identify key features or essential features of the claimed subject matter, nor is it intended to be used to limit the scope of the claimed subject matter.

### BRIEF DESCRIPTION OF THE DRAWINGS

Figure 1 illustrates a flow chart of a method of operating a computer aided design system for the design of human mechanical interface animated graphical elements.

Figure 2 illustrates a block diagram of a computer system configured to operate as a computer aided design system.

Figure 3 illustrates a workflow diagram of the workflow associated with the computer aided design of human mechanical interface animated graphical elements.

Figure 4 illustrates a block diagram of a computer system configured to operate as a computer aided design system.

Figure 5 illustrates an example human mechanical interface animated graphical element representing a tank containing a quantity of material.

Figure 6 illustrates the various layers and components of the example human mechanical interface animated graphical element representing a tank containing a quantity of material from Figure 5.

Figure 7 illustrates a method for indicating a varying quantity of the material within the tank from Figure 5.

### DETAILED DESCRIPTION

The following description and associated drawings teach the best mode of the invention. For the purpose of teaching inventive principles, some conventional aspects of the best mode may be simplified or omitted. The following claims specify the scope of the invention. Some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by claims and their equivalents.

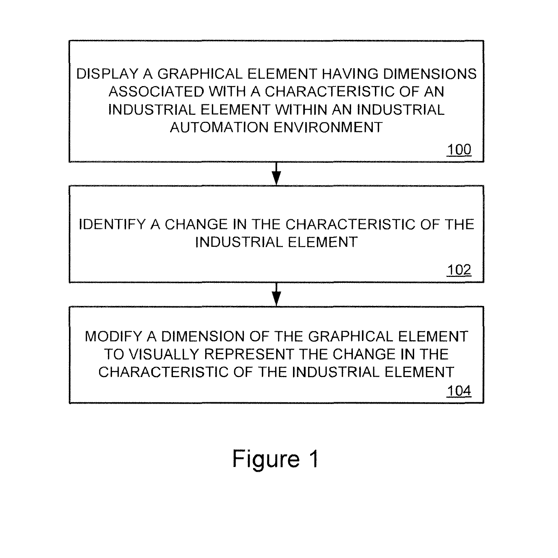

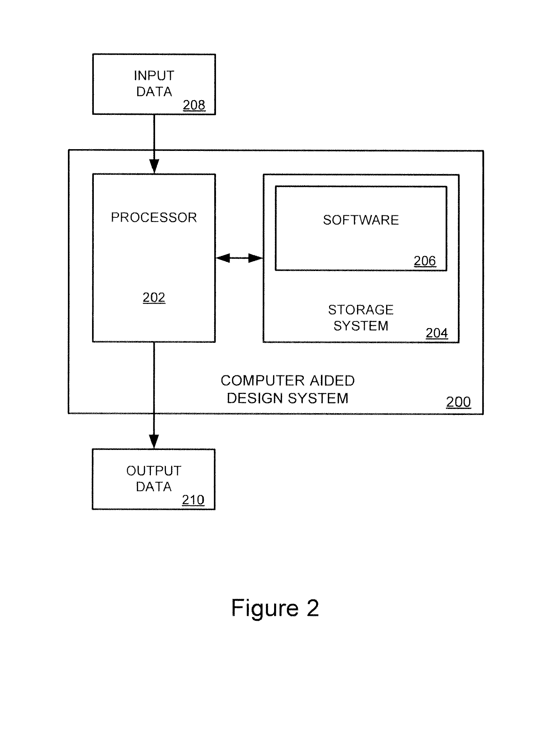

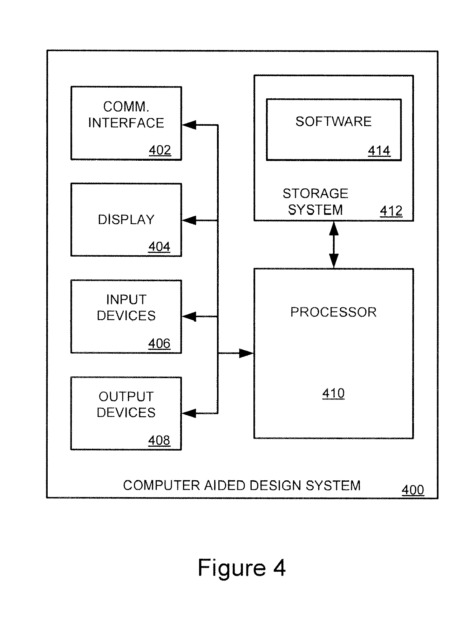

Figure 1 illustrates a flow chart of a method of operating a computer aided design system for the design of human mechanical interface animated graphical elements. In this example embodiment of a method for the computer aided design of human machine interface animated graphical elements, various graphical elements are created and modified by computer aided design systems such as those illustrated in Figures 2 and 4 and described later. Various operations of this method may be performed by one or more computer aided design systems, and there is no need to tie any operation to any specific computer aided design system as general purpose computers may be configured to operate as computer aided design systems capable of performing the operations of the method described herein.

One or more non-transitory computer-readable media having stored thereon program instructions to facilitate the computer aided design of human machine interface animated graphical elements are provided. The program instructions, when executed by a computing system, direct the computing system to at least display a graphical element having dimensions associated with a characteristic of an industrial element within an industrial automation environment, (operation 100).

For example, an industrial element such as a bin containing a quantity of material may be represented by a graphical element for display within a human-machine interface coupled to various industrial elements within an industrial automation environment. The graphical element may represent the bin and a portion of the graphical element may be associated with a characteristic of the bin, such as the volume of material contained within the bin. One or more dimensions (such as gradient stop points, height, width, color, or the like) of the graphical element are associated with the volume of material contained within the bin.

The program instructions also direct the computing system to at least identify a change in the characteristic of the industrial element, (operation 102). The computing system is configured to identify changes in the characteristic of the industrial element. In the example above, the computing system is configured to detect changes in the volume of material contained within the bin.

The program instructions further direct the computing system to at least modify a dimension of the graphical element to visually represent the change in the characteristic of the industrial element, (operation 104). In response to identifying a change in the characteristic of the industrial element, the computing system is configured to modify a dimension of the graphical element in order to visually represent the change in the characteristic.

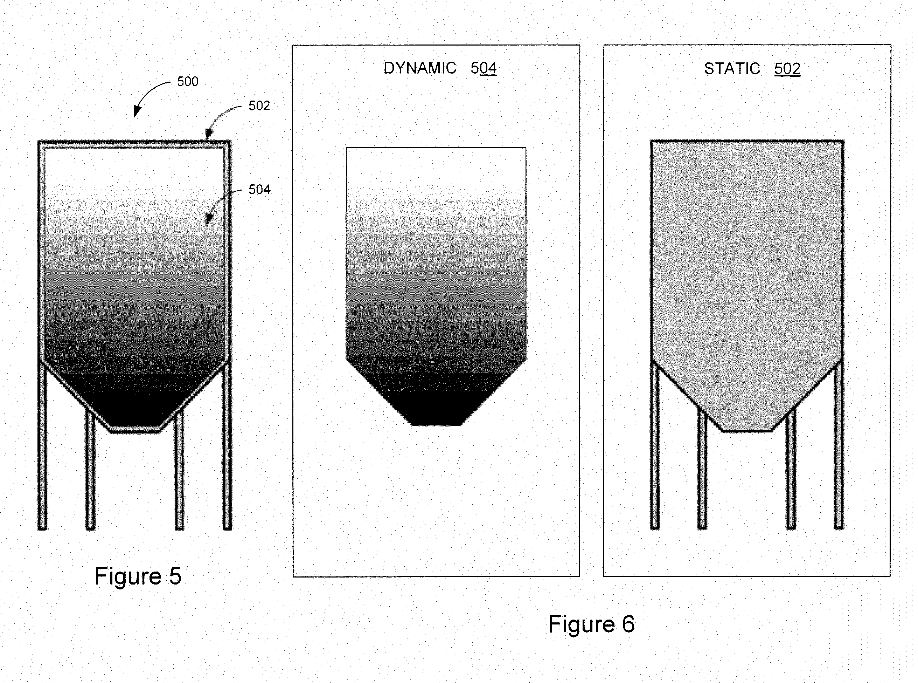

In the example above, the computing system is configured to modify a dimension (such as gradient stop points, height, width, color, or the like) of the graphical element that is associated with the volume of material contained within the bin. The example illustrated in Figures 5-7 modifies gradient stop points within the dynamic graphical element to represent changing values for the characteristic of the industrial element. Thus the modified graphical element now visually represents the volume of material contained within the bin.

In some embodiments, the graphical element may include a dynamic graphical element and the characteristic of the industrial element is a dynamic characteristic. In example embodiments, the dynamic characteristic may be any changing characteristic of the industrial element such as a volume of material associated with the industrial element, a temperature associated with the industrial element, and the like.

In further embodiments, the one or more non-transitory computer-readable media further direct the computing system to at least display a static graphical element simultaneously with the dynamic graphical element, the static graphical element associated with a static characteristic of the industrial element.

In such an embodiment, the graphical element includes both a static graphical element and a dynamic graphical element. Such an example is further illustrated in Figures 5-7. In example embodiments, the static characteristic may be any non-changing characteristic of the industrial element such as a shape of the industrial element, one or more dimensions of the industrial element, and the like.

Referring now to Figure 2, computer aided design system 200 and the associated discussion are intended to provide a brief, general description of a suitable computing environment in which the process illustrated in Figure 1 may be implemented. Many other configurations of computing devices and software computing systems may be employed to implement a system for computer aided design system for the design of human mechanical interface animated graphical elements.

Computer aided design system 200 may be any type of computing system capable of processing graphical elements, such as a server computer, client computer, internet appliance, or any combination or variation thereof. Figure 4, discussed in more detail later, provides a more detailed illustration of an example computer aided design system. Indeed, computer aided design system 200 may be implemented as a single computing system, but may also be implemented in a distributed manner across multiple computing systems. For example, computer aided design system 200 may be representative of a server system (not shown) with which the computer systems (not shown) running software 206 may communicate to enable computer aided design features. However, computer aided design system 200 may also be representative of the computer systems that run software 206. Indeed, computer aided design system 200 is provided as an example of a general purpose computing system that, when implementing the method illustrated in Figure 1, becomes a specialized system capable of computer aided design of human mechanical interface animated graphical elements.

Computer aided design system 200 includes processor 202, storage system 204, and software 206. Processor 202 is communicatively coupled with storage system 204. Storage system 204 stores computer aided design software 206 which, when executed by processor 202, directs computer aided design system 200 to operate as described for the method illustrated in Figure 1.

Referring still to Figure 2, processor 202 may comprise a microprocessor and other circuitry that retrieves and executes computer aided design software 206 from storage system 204. Processor 202 may be implemented within a single processing device but may also be distributed across multiple processing devices or sub-systems that cooperate in executing program instructions. Examples of processor 202 include general purpose central processing units, application specific processors, and graphics processors, as well as any other type of processing device.

Storage system 204 may comprise any storage media readable by processor 202 and capable of storing computer aided design software 206. Storage system 204 may include volatile and nonvolatile, removable and non-removable media implemented in any method or technology for storage of information, such as computer readable instructions, data structures, program modules, or other data. Storage system 204 may be implemented as a single storage device but may also be implemented across multiple storage devices or sub-systems. Storage system 204 may comprise additional elements, such as a controller, capable of communicating with processor 202.

Examples of storage media include random access memory, read only memory, magnetic disks, optical disks, and flash memory, as well as any combination or variation thereof, or any other type of storage media. In some implementations, the storage media may be a non-transitory storage media. In some implementations, at least a portion of the storage media may be transitory. It should be understood that in no case is the storage media a propagated signal.

Computer aided design software 206 comprises computer program instructions, firmware, or some other form of machine-readable processing instructions having at least some portion of the method illustrated in Figure 1 embodied therein. Computer aided design software 206 may be implemented as a single application but also as multiple applications. Computer aided design software 206 may be a stand-alone application but may also be implemented within other applications distributed on multiple devices, including but not limited to other design software and operating system software.

In general, computer aided design software 206 may, when loaded into processor 202 and executed, transform processor 202, and computer aided design system 200 overall, from a general-purpose computing system into a special-purpose computing system customized to aid in the computer aided design of graphical elements as described by the method illustrated in Figure 1 and its associated discussion.

Encoding computer aided design software 206 may also transform the physical structure of storage system 204. The specific transformation of the physical structure may depend on various factors in different implementations of this description. Examples of such factors may include, but are not limited to: the technology used to implement the storage media of storage system 204, whether the computer-storage media are characterized as primary or secondary storage, and the like.

For example, if the computer-storage media are implemented as semiconductor-based memory, computer aided design software 206 may transform the physical state of the semiconductor memory when the software is encoded therein. For example, computer aided design software 206 may transform the state of transistors, capacitors, or other discrete circuit elements constituting the semiconductor memory.

A similar transformation may occur with respect to magnetic or optical media. Other transformations of physical media are possible without departing from the scope of the present description, with the foregoing examples provided only to facilitate this discussion.

Referring again to Figures 1 and 2, through the operation of computer aided design system 200 employing computer aided design software 206, transformations are performed on input data 208, resulting in output data 210. As an example, input data 208 could be considered transformed from one state to another by the transformation of various elements of graphical data contained therein.

Computer aided design system 200 may have additional devices, features, or functionality. Computer aided design system 200 may optionally have input devices such as a keyboard, a mouse, a voice input device, or a touch input device, and comparable input devices. Output devices such as a display, speakers, printer, and other types of output devices may also be included. Computer aided design system 200 may also contain communication connections and devices that allow computer aided design system 200 to communicate with other devices, such as over a wired or wireless network in a distributed computing and communication environment. These devices are well known in the art and need not be discussed at length here.

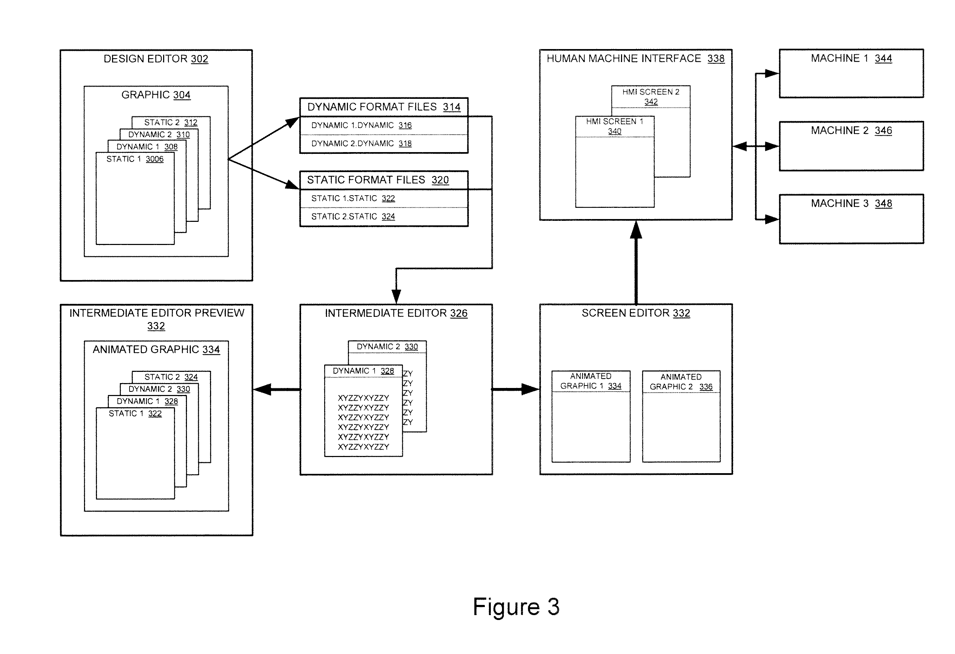

Figure 3 illustrates a workflow diagram of the workflow associated with the computer aided design of human mechanical interface animated graphical elements. This workflow diagram illustrates in more detail the method shown in Figure 1 and described above.

A graphic 304 is designed within design editor 302. Graphic 304 includes four components: static 1 component 306, dynamic 1 component 308, dynamic 2 component 310, and static 2 component 312. These four components may be placed on one or more layers within graphic 304.

Dynamic 1 component 308 and dynamic 2 component 310 are converted into dynamic format files 314 as DYNAMIC 1.DYNAMIC 316 and DYNAMIC 2.DYNAMIC 318 respectively. Static 1 component 306 and static 2 component 312 are converted into static format files 320 as STATIC 1.STATIC 322 and STATIC 2.STATIC 324. These four files are then exported into intermediate editor 326, where the dynamic components may be edited to add properties and bindings.

In an example embodiment, the dynamic files are in an extensible markup language, and intermediate editor 326 includes a markup language editor, providing a user with a means of adding properties and bindings to the dynamic components. In some examples, intermediate editor 326 includes intermediate editor preview 332, where the modified dynamic components may be previewed in conjunction with their associated static components to insure that the modifications to the dynamic components are error free. In this example, intermediate editor preview 332, displays animated graphic 334 on a display device. Animated graphic 334 includes four components: static 1 component 322, modified dynamic 1 component 328, modified dynamic 2 component 330, and static 2 component 324.

Once the desired modifications to the dynamic components have been made in the intermediate editor, the graphic is exported into screen editor 332, where human machine interface screens are assembled and tested. In this example, screen editor 332 displays animated graphic 1 334 and animated graphic 2 336 for incorporation into a human machine interface screen.

Human machine interface 338 is configured to display a plurality of human machine interface screens such as human machine interface screen 1 340 and human machine interface screen 2 342 as illustrated in Figure 3. Animated graphical elements with any or all of these screens may correspond to first machine 344, second machine 346, and/or third machine 348.

Figure 4 illustrates a block diagram of a computer system configured to operate as a computer aided design system 400. The method illustrated in Figure 1 is implemented on one or more computer aided design systems 400, as shown in Figure 4. Computer aided design system 400 includes communication interface 402, display 404, input devices 406, output devices 408, processor 410, and storage system 412. Processor 410 is linked to communication interface 402, display 404, input devices 406, output devices 408, and storage system 412. Storage system 412 includes a non-transitory memory device that stores operating software 414.

Communication interface 402 includes components that communicate over communication links, such as network cards, ports, RF transceivers, processing circuitry and software, or some other communication devices. Communication interface 402 may be configured to communicate over metallic, wireless, or optical links. Communication interface 402 may be configured to use TDM, IP, Ethernet, optical networking, wireless protocols, communication signaling, or some other communication format - including combinations thereof.

Display 404 may be any type of display capable of presenting information to a user. Displays may include touch screens in some embodiments. Input devices 406 include any device capable of capturing user inputs and transferring them to computer aided design system 400. Input devices 406 may include a keyboard, mouse, touch pad, or some other user input apparatus. Output devices 408 include any device capable of transferring outputs from computer aided design system 400 to a user. Output devices 408 may include printers, projectors, displays, or some other user output apparatus. Display 404, input devices 406, and output devices 408 may be external to computer aided design system 400 or omitted in some examples.

Processor 410 includes a microprocessor and other circuitry that retrieves and executes operating software 414 from storage system 412. Storage system 412 includes a disk drive, flash drive, data storage circuitry, or some other non-transitory memory apparatus. Operating software 414 includes computer programs, firmware, or some other form of machine-readable processing instructions. Operating software 414 may include an operating system, utilities, drivers, network interfaces, applications, or some other type of software. When executed by processing circuitry, operating software 414 directs processor 410 to operate computer aided design system 400 according to the method illustrated in Figure 1.

In this example, computer aided design system 400 executes a number of methods stored as software 414 within storage system 412. The results of these graphical element modifications are displayed to a user via display 404, or output devices 408. Input devices 406 allow users to input a variety of data required by the computer aided design system.

For example, processor 410 receives input data 208 either from communication interface 402, input devices 406, or storage system 412. Processor 410 then operates on input data 208 to produce output data 210 which may be stored in storage system 412, displayed on display 404, or output through output devices 408.

Figure 5 illustrates an example human mechanical interface animated graphical element representing a tank 500 containing a quantity of material 504. In this example embodiment, an animated graphic of a tank 500 is configured to show the amount of a material contained within the tank. Tank 500 includes tank body 502 and material 504. Note that the quantity of material 504 is represented by graded shading of the interior of tank body 502. In this example embodiment, tank body 502 is a static graphical element and material 504 is a dynamic graphical element.

Normally, animated graphics of similar devices use varying heights of rectangles to represent quantities of materials, equivalent to a bar graph. However, in this example, tank body 502 is not rectangular in shape, but includes a tapered bottom. Thus, the quantity of material 504 within tank body 502 cannot be represented by a rectangle of varying height. Note that in this example the vertical dimension of material 504 is associated with the quantity (or volume) of material contained within tank 500.

Figure 6 illustrates the various layers and components of the example human mechanical interface animated graphical element representing a tank containing a quantity of material from Figure 5. In this example, the animated graphical element representing the tank from Figure 5 is implemented with two components: dynamic graphical element 504, and static graphical element 502, each having the shape illustrated.

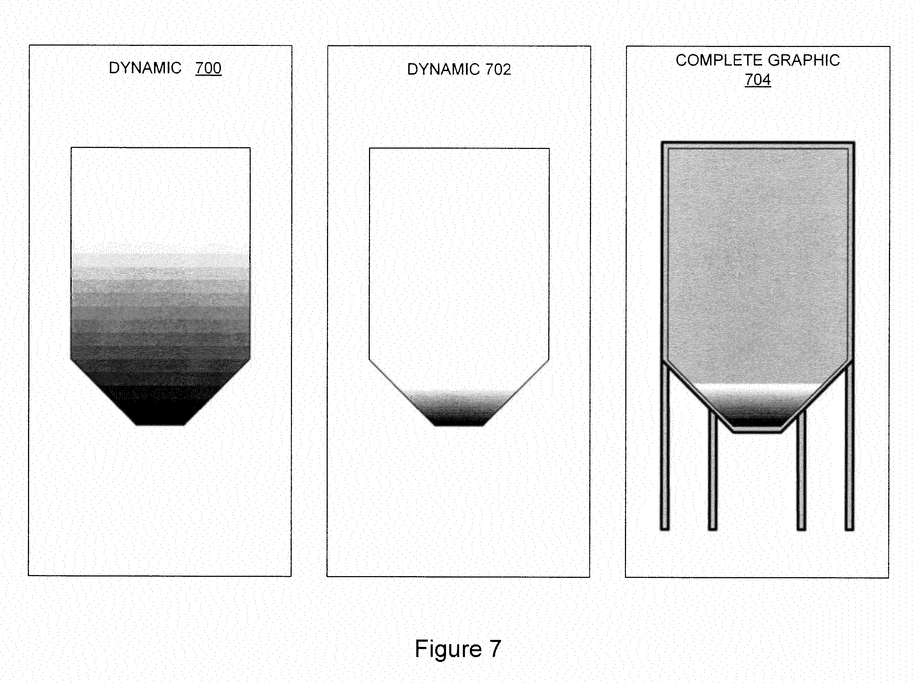

Figure 7 illustrates a method for indicating a varying quantity of the material within the tank from Figure 5. In this example, the material 504 within tank body 502 is diminishing. The dynamic graphical element shown in display 700 shows the material at a level lower than that illustrated in Figure 5, and the dynamic graphical element shown in display 702 shows the material at a still lower level. Note that these modifications to the dynamic graphical element are performed by simply modifying the vertical dimension of gradient stop points within the dynamic graphical element.

Notice that in display 702 the quantity of the material has diminished to the point that it is fully contained within the sloping portion of tank body 502. Here the quantity of material is represented by a shaded area at the bottom of the component. This is accomplished by dynamically moving gradient stop points in a vertical dimension within the dynamic component. By moving gradient stop points an irregular shape may be shown at various fill levels in a simple manor.

This technique allows a human machine interface to display various quantities of materials in irregularly shaped containers to be displayed efficiently with minimum use of memory and processor cycles. Fill level data received from the container may be easily translated into gradient stop points and the gradient fill function available on most graphics processors may then be used to illustrate the fill level of the irregularly shaped container.

Described below are additional methods of arranging "static" versus "dynamic" graphics in a way that maintains the full fidelity without sacrificing performance. Given that there is a direct correlation between performance and product cost, and a direct correlation between product cost and profitability (either in terms of increased margins, or increased demand with the ability to lower costs) -- methods like these are extremely valuable.

1) **Level Fill Animations** of irregular objects using gradient stop points is performed by graphic designers (up the chain as high as possible) in a way that takes advantage of control system data when wired up correctly by the designer.

Traditionally, designers change the height or width to give the effect of level change (or progress bar changes). However, this approach only applies to rectangles. When applied to an irregular shaped object layered above the irregular shaped containing graphic, the object on top is only collapsed, and does not stay within the container's extents. Also, if gradients are used, the gradient spread also gets collapsed, failing to mimic the properties of the optical light effects at the top of the liquid.

Other designers use a vector mask and raise or lower the height of the vector mask. However, masking is an expensive operation in terms of performance. Also, two separate path objects are required (one for the original shape, and one for the mask -- this increases both rendering performance and the memory required to operate on the shapes as well as storage of the object itself). Further, if gradients are used, the entire gradient spread gets "chopped" off, leaving an undesirable and unrealistic looking effect on the liquid.

Instead of these traditional approaches, top fill level gradient stop points (one with full color at a fill level opacity, and one with fully transparent of the same color) together along a very wide gradient spread produce a realistic edge of where the contents meet the space above (i.e. the optics of the water meeting air is preserved). This method solves all of the 5 problems listed in the traditional methods above, while gaining the benefits of performance and graphic appearance.

2) **Layering Static Graphics On Top of Dynamic** to show color change on graphical representations of machine objects (indicate status - lights on/off, different colors that represent different states, etc...). Traditionally, complex paths are dynamic. However, drawing complex paths (especially vector based text and things like circles) is inefficient.

Other designers, show or hide static images to give the illusion of color change. However, large numbers of static objects need to be created and independently rendered based on the number of color desired. Further, the colors cannot be dynamic. Thus, every shapes needs a separate image for every colorized to be created statically and loaded prior to being used in a graphical human-machine interface system.

Instead of these traditional methods, a designer may "punch out" the shape that is to look dynamic and leave that as a static overly that hovers or floats above a simple dynamic rectangle shape that can be colorized. Rectangles are easy to change dynamically. The alpha channel (transparency channel) of the overlay of the static object will allow the color of the simply drawn color underneath to show through. The result is dramatic improvement of performance, while maintaining fantastic look. The only inherent drawback to the first traditional method is that the actual path of the static shape is not dynamic, but objects whose paths do not change include control equipment (all of the LEDs that show through colored text or symbols) and static signs whose text changes colors (such as hotel Vacancy/No Vacancy signs), making this novel method valuable for rendering static text on non-changing backgrounds.

3) **Compound Paths to Simplify Color Animation:** When drawing objects in Adobe Illustrator, each path is its own object, thus wiring up each colorizing object is tedious and this requires more performance overhead to manage these additional objects separately.

Instead, a designer may combine all of the different shapes in to a compound path, which allows all of those paths to be dynamically controlled as a single complex shape, instead of many different shapes. This method improves performance and decreases design time, and decreases the risk of wiring errors.

4) **Diagnostic Graphic for Direct Device Interaction:** Traditionally, a designer or computer programmer needs to create both logix in a controller and a proxy data connect in order to see controller diagnostic information on an HMI screen.

Instead, a designer may pre-build graphics with embedded behaviors that can communicate directly with control-system data without the customer needing to wire up the points. If auto-discovery is not available, a designer would simply add a pre-built graphic element to their display screen for a given device in the control system and point the graphic to the device with a data path specification. Then when deployed, the graphic element has everything it needs inside to appropriately indicate diagnostic information, as well as influence the device. Secondly, in order for this to work without disrupting a running system, the data is both collated in order to minimize the number of individual requests, but also the refresh rate is restricted to be slow enough not to introduce problems in the control system.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

### The following is a list of further preferred embodiments of the invention:

Embodiment 1: One or more non-transitory computer-readable media having stored thereon program instructions to facilitate the computer aided design of human machine interface animated graphical elements, wherein the program instructions, when executed by a computing system, direct the computing system to at least:
   display a graphical element having dimensions associated with a characteristic of an industrial element within an industrial automation environment;
   identify a change in the characteristic of the industrial element; and
   modify a dimension of the graphical element to visually represent the change in the characteristic of the industrial element.
Embodiment 2: The one or more non-transitory computer-readable media of embodiment 1, wherein the graphical element comprises a dynamic graphical element and wherein the characteristic comprises a dynamic characteristic.
Embodiment 3: The one or more non-transitory computer-readable media of embodiment 2, wherein the dynamic characteristic is a volume of material associated with the industrial element.
Embodiment 4: The one or more non-transitory computer-readable media of embodiment 2, wherein the dynamic characteristic is a temperature associated with the industrial element.
Embodiment 5: The one or more non-transitory computer-readable media of embodiment 2, wherein the program instructions further direct the computing system to at least:
   display a static graphical element simultaneously with the dynamic graphical element, the static graphical element associated with a static characteristic of the industrial element.
Embodiment 6: The one or more non-transitory computer-readable media of embodiment 5, wherein the static characteristic is a shape of the industrial element.
Embodiment 7: The one or more non-transitory computer-readable media of embodiment 1, wherein the program instructions further direct the computing system to modify the dimension of the graphical element to visually represent the change in the characteristic of the industrial element by moving gradient stop points within the graphical element.
Embodiment 8: A method for the computer aided design of human machine interface animated graphical elements, the method comprising:
   displaying a graphical element having dimensions associated with a characteristic of an industrial element within an industrial automation environment;
   identifying a change in the characteristic of the industrial element; and
   modifying a dimension of the graphical element to visually represent the change in the characteristic of the industrial element.
Embodiment 9: The method of embodiment 8, wherein the graphical element comprises a dynamic graphical element and wherein the characteristic comprises a dynamic characteristic.
Embodiment 10: The method of embodiment 9, wherein the dynamic characteristic is a volume of material associated with the industrial element.
Embodiment 11: The method of embodiment 9, wherein the dynamic characteristic is a temperature associated with the industrial element.
Embodiment 12: The method of embodiment 9, further comprising:
   displaying a static graphical element simultaneously with the dynamic graphical element, the static graphical element associated with a static characteristic of the industrial element.
Embodiment 13: The method of embodiment 12, wherein the static characteristic is a shape of the industrial element.
Embodiment 14: The method of embodiment 8, wherein modifying the dimension of the graphical element to visually represent the change in the characteristic of the industrial element includes moving gradient stop points within the graphical element.
Embodiment 15: A computer aided design system for the computer aided design of human machine interface animated graphical elements, the computer aided design system comprising:
   a communication interface configured to receive characteristics of an industrial element within an industrial automation environment; and
   a processor coupled to the communication interface configured to initiate a display of a graphical element having dimensions associated with a characteristic of the industrial element; identify a change in the characteristic of the industrial element; modify a dimension of the graphical element to visually represent the change in the characteristic of the industrial element; and to initiate a display of the modified graphical element.
Embodiment 16: The computer aided design system of embodiment 15, wherein the graphical element comprises a dynamic graphical element and wherein the characteristic comprises a dynamic characteristic.
Embodiment 17: The computer aided design system of embodiment 16, wherein the dynamic characteristic is a volume of material associated with the industrial element.
Embodiment 18: The computer aided design system of embodiment 16, wherein the dynamic characteristic is a temperature associated with the industrial element.
Embodiment 19: The computer aided design system of embodiment 16, wherein the program instructions further direct the computing system to at least:
   display a static graphical element simultaneously with the dynamic graphical element, the static graphical element associated with a static characteristic of the industrial element.
Embodiment 20: The computer aided design system of embodiment 19, wherein the static characteristic is a shape of the industrial element.
Embodiment 21: The computer aided design system of embodiment 15, wherein the processor is further configured to modify the dimension of the graphical element to visually represent the change in the characteristic of the industrial element by moving gradient stop points within the graphical element.

## Claims

1. A method for the computer-aided design of human machine interface animated graphical elements, the method comprising:
displaying a graphical element having dimensions associated with a characteristic of an industrial element within an industrial automation environment;
identifying a change in the characteristic of the industrial element; and
modifying a dimension of the graphical element to visually represent the change in the characteristic of the industrial element.

2. The method of claim 1, wherein the graphical element comprises a dynamic graphical element and wherein the characteristic comprises a dynamic characteristic.

3. The method of claim 2, wherein the dynamic characteristic is a volume of material associated with the industrial element.

4. The method of claim 2, wherein the dynamic characteristic is a temperature associated with the industrial element.

5. The method of claim 2, further comprising:
displaying a static graphical element simultaneously with the dynamic graphical element, the static graphical element associated with a static characteristic of the industrial element.

6. The method of claim 5, wherein the static characteristic is a shape of the industrial element.

7. The method of claim 1, wherein modifying the dimension of the graphical element to visually represent the change in the characteristic of the industrial element includes moving gradient stop points within the graphical element.

8. One or more non-transitory computer-readable media having stored thereon program instructions to facilitate the computer-aided design of human machine interface animated graphical elements, wherein the program instructions, when executed by a computing system, direct the computing system to perform a method according to one of claims 1 to 7.

9. A computer-aided design system for the computer-aided design of human machine interface animated graphical elements, the computer-aided design system comprising:
a communication interface configured to receive characteristics of an industrial element within an industrial automation environment; and
a processor coupled to the communication interface configured to initiate a display of a graphical element having dimensions associated with a characteristic of the industrial element; identify a change in the characteristic of the industrial element; modify a dimension of the graphical element to visually represent the change in the characteristic of the industrial element; and to initiate a display of the modified graphical element.

10. The computer-aided design system of claim 9, wherein the graphical element comprises a dynamic graphical element and wherein the characteristic comprises a dynamic characteristic.

11. The computer-aided design system of claim 10, wherein the dynamic characteristic is a volume of material associated with the industrial element.

12. The computer-aided design system of claim 10, wherein the dynamic characteristic is a temperature associated with the industrial element.

13. The computer-aided design system of claim 10, wherein the program instructions further direct the computing system to at least:
display a static graphical element simultaneously with the dynamic graphical element, the static graphical element associated with a static characteristic of the industrial element.

14. The computer-aided design system of claim 13, wherein the static characteristic is a shape of the industrial element.

15. The computer-aided design system of claim 9, wherein the processor is further configured to modify the dimension of the graphical element to visually represent the change in the characteristic of the industrial element by moving gradient stop points within the graphical element.
